# EUROPEAN PATENT SPECIFICATION

(11) **EP 4 531 314 B1**
(45) Date of publication and mention of the grant of the patent: **14.10.2026**
(21) Application number: 24211060.9
(22) Date of filing: 11.03.2011
(51) Int. Cl.: H04L 1/00, H04L 1/08, H04B 7/04

(54) **METHOD AND APPARATUS FOR TRANSCEIVING DATA IN A MIMO SYSTEM**
VERFAHREN UND VORRICHTUNG ZUM SENDEN UND EMPFANGEN VON DATEN IN EINEM MIMO-SYSTEM
PROCÉDÉ ET APPAREIL D'ÉMISSION-RÉCEPTION DE DONNÉES DANS UN SYSTÈME MIMO

(30) Priority: 11.03.2010 KR 20100021576; 12.03.2010 KR 20100022033; 01.07.2010 KR 20100063638; 09.07.2010 KR 20100066599; 12.07.2010 KR 20100066851; 14.07.2010 KR 20100068168
(43) Date of publication of application: 02.04.2025
(60) Divisional application: 26203130.5
(62) Document number(s) of the earlier application(s) in accordance with Art. 76 EPC: 20194807.2 / 3 783 822; 16161385.6 / 3 079 269; 11753656.5 / 2 547 001
(73) Proprietor: Electronics and Telecommunications Research Institute, Daejeon-city 305-350 (KR)
(72) Inventor: Park, Jaewoo, 305-770 Daejeon (KR); Oh, Jong-Ee, 305-509 Daejeon (KR); Lee, Il-Gu, 158-772 Seoul (KR); Lee, Sok-Kyu, 305-762 Daejeon (KR); Cheong, Minho, 305-759 Daejeon (KR); Choi, Jeeyon, 305-340 Daejeon (KR); Lee, Jae-Seung, 302-777 Daejeon (KR); Kim, Yun-Joo, 443-400 Suwon-si (KR)
(74) Representative: Betten & Resch

(56) References cited:
- US-B1- 7 062 703
- ZHANG H ET AL: "802.11ac Preamble", 18 January 2010 (2010-01-18), pages 1 - 11, XP002610760, Retrieved from the Internet <URL:https://mentor.ieee.org/802.11/dcn/10/11-10-0359-00-00ac-802-11ac-preamble.ppt> [retrieved on 20101122]
- HEMANTH SAMPATH (QUALCOMM): "11ac Preamble ; 11-10-0876-00-00ac-11ac-preamble", IEEE DRAFT; 11-10-0876-00-00AC-11AC-PREAMBLE, IEEE-SA MENTOR, PISCATAWAY, NJ USA, vol. 802.11ac, 14 July 2010 (2010-07-14), pages 1 - 18, XP017676497
- ANONYMOUS ED - ANONYMOUS: "Supplement to IEEE standard for information technology - telecommunications and information exchange between systems - local and metropolitan area networks - specific requirements. Part 11: wireless LAN Medium Access Control (MAC) and Physical Layer (PHY) specifications: high-speed physical layer in", 30 December 1999, IEEE STANDARD; [IEEE STANDARD], IEEE, PISCATAWAY, NJ, USA, ISBN: 978-0-7381-1809-3, XP017600950
- LEONARDO LANANTE (KYUSHU INSTITUTE OF TECHNOLOGY): "IEEE802.11ac Preamble with Legacy 802.11a/n Backward Compatibility ; 11-09-0847-00-00ac-ieee802-11ac-preamble-with-legacy-802-11a-n-backward-compatibility", IEEE DRAFT; 11-09-0847-00-00AC-IEEE802-11AC-PREAMBLE-WITH-LEGACY-802-11A-N-BACKWARD-COMPATIBILITY, IEEE-SA MENTOR, PISCATAWAY, NJ USA, vol. 802.11ac, 14 July 2009 (2009-07-14), pages 1 - 18, XP017678509
- WAHYUL AMIEN SYAFEI ET AL: "A design of next generation Gigabit MIMO wireless LAN system", ADVANCED COMMUNICATION TECHNOLOGY (ICACT), 2010 THE 12TH INTERNATIONAL CONFERENCE ON, IEEE, PISCATAWAY, NJ, USA, 7 February 2010 (2010-02-07), pages 941 - 946, XP031653679, ISBN: 978-1-4244-5427-3

## Description

### [Technical Field]

The present invention relates to a method and apparatus for transmitting and receiving data, and more particularly, to a method and apparatus for transmitting and receiving data in a multiple input multiple output (MIMO) system.

### [Background Art]

A wireless local area network (WLAN) basically supports a basic service set (BSS) mode including an access point (AP) serving as a connection point of a distribution system (DS) and a plurality of stations (STAs), not APs, or an independent BSS (IBSS) mode including only stations (STAs) (hereinafter, AP and STA will be referred to as a 'terminal').

In a communication system such as a WLAN, or the like, a frame (or a data frame) and length information regarding the length of the frame are exchanged between a media access control (MAC) layer and a physical (PHY) layer. In order to inform a receiver (or a receiving end) about the end of the frame, the PHY layer of a transmitter (or a sending end) includes a header having the information regarding the length of the frame in the frame and transmits the same, or adds a delimiter including information indicating the end of the frame in the end of the frame. Accordingly, in the PHY layer of the receiver recognizes the end of the received frame by using the length information or the delimiter information having a particular format included in the received frame.

An international standard of the WLAN by IEEE 802.11 defines a data unit processed in the MAC layer, as a MAC protocol data unit (MPDU). When the MPDU is transferred from the MAC layer to the PHY layer, it is called a PHY service data unit (PSDU). The information regarding the length of the frame for recognizing the end of the frame is transferred, along with the PSDU, from the MAC layer to the PHY layer. The PHY layer of the transmitter transmits the information regarding the length of the frame together with the data to the receiver. A decoder of the PHY layer of the receiver restores the MPDU included in the PSDU by the length indicated in the length information by using the length information included in a signal symbol of a physical layer convergence protocol (PLCP) preamble of the received frame, and transfers the restored data and length information to the MAC layer.

For communication based on the standard IEEE 802.11, various methods are used for the transmitter to transfer length information to the receiver. For example, in 802.11b, a PLCP header includes time information having a size of 16 bits, and in 802.11a/g, an L-SIG field of a PLCP preamble includes length information having a size of 12 bits representing the length of a frame by byte. Also, in 802.11n, an HT-SIG field of the PLCP preamble includes length information having a size of 16 bits representing the length of an MPDU or an A-MPDU (Aggregated-MPDU) of the MAC layer by byte.

ZHANG H ET AL: "802.11 ac Preamble", IEEE 802.11-10/0070R0, 18 January 2010 (2010-01-18), pages 1-11, XP002610760, presents a preamble structure and VHTSIG field considerations.

### [Disclosure]

### [Technical Problem]

The present invention provides a method and apparatus for accurately informing a receiver about the end of a transmitted frame to thus allow the receiver to effectively restore the frame, in a communication system in which a frame is transmitted by using multiple input multiple output (MIMO).

The foregoing and other objects, features, aspects and advantages of the present invention will be understood and become more apparent from the following detailed description of the present invention. Also, it can be easily understood that the objects and advantages of the present invention can be realized by the units and combinations thereof recited in the claims.

### [Technical Solution]

The invention is defined in the appended claims.

### [Advantageous Effects]

According to embodiments of the present invention, in a communication system in which a frame is transmitted by using MIMO, the end of a transmitted frame is accurately informed to a receiver, so the receiver can effectively restore the frame.

### [Description of Drawings]

FIG 1 shows a method for informing about the end of a frame by using a transmission duration and frame padding.
FIG 2 shows an embodiment in which information regarding the end of a frame is provided to a receiver by using transmission duration information and frame length information according to an embodiment of the present invention.
FIG 3 shows another embodiment in which information regarding the end of a frame is provided to a receiver by using transmission duration information and frame length information according to an embodiment of the present invention.
FIG 4 shows a PPDU format of MU-MIMO to which a data transmission and reception method according to an embodiment of the present invention is applied.
FIG 5 shows the configuration of a VHT-DATA field according to an embodiment of the present invention.
FIG 6 shows a format of a PHY service data unit (PSDU) included in the VHT-DATA field in FIG 5.
FIG 7 shows an embodiment in which length information of the PSDU is designated in the VHT SIG-B according to the present invention.
FIG 8 shows an embodiment in which length information is designated by using a service field according to the present invention.
FIG 9 shows an embodiment in which length information is designated by using both a VHT-SIG B field and a service field according to the present invention.
FIG 10 shows an embodiment in which a length field of a PSDU is protected by using a parity bit according to the present invention.
FIG 11 shows an embodiment in which a symbol length of each user is transferred to the receiver according to the present invention.
FIG 12 shows a method for protecting the VHT-SIG B field in the embodiment of FIG 11.
FIG 13 shows an embodiment in which length information of the PSDU is transmitted in units of Qword (4 bytes) according to the present invention.
FIG 14 shows an embodiment in which only the length information of the PSDU is included in the VHT-SIG B field according to the present invention.
FIG 15 shows an embodiment in which length information is represented by combining a MAC padding scheme and a length indication scheme according to the present invention.
FIG 16 shows embodiments in which an additional tail pad of FIG 15 is substituted according to the present invention.
FIG 17 is a block diagram for explaining an insertion of a PHY pad performed in a PHY layer.
FIG 18 shows a modulation scheme of the VHT-SIG B and a data representation scheme according to bandwidth.
FIG 19 illustrates a PPDU format according to an embodiment of the present invention.
FIG 20 illustrates a PPDU format according to another embodiment of the present invention.
FIG 21 shows the configuration of a transmission terminal according to an embodiment of the present invention.
FIG 22 shows the configuration of a reception terminal according to an embodiment of the present invention.
FIG 23 is a flow chart illustrating a process of a data transmission method according to an embodiment of the present invention.
FIG 24 is a flow chart illustrating a process of a data reception method according to an embodiment of the present invention.

### [Mode for Invention]

The foregoing and other objects, features, aspects and advantages of the present invention will be described in detail in conjunction with the accompanying drawings, and accordingly, a person skilled in the art to which the present invention pertains will easily implement the technical concept of the present invention. In describing the present invention, if a detailed explanation for a related known function or construction is considered to unnecessarily divert the gist of the present invention, such explanation will be omitted but would be understood by those skilled in the art. The embodiments of the present invention will now be described with reference to the accompanying drawings, in which like numbers refer to like elements in the drawings.

For communication based on the standard IEEE 802.11, various methods are used for a transmitter (or a sending end) to transfer length information to a receiver (or a receiving end). For example, in 802.11b, a PLCP header includes time information having a size of 16 bits, and in 802.11a/g, an L-SIG field of a PLCP preamble includes length information having a size of 12 bits representing the length of a frame by byte. Also, in 802.11n, an HT-SIG field of the PLCP preamble includes length information having a size of 16 bits representing the length of an MPDU or an A-MPDU (Aggregated-MPDU) of the MAC layer by byte.

Meanwhile, in 802.11ac, multiple input multiple output (MIMO) wireless transmission using multiple antennas is used. In 802.11ac, MIMO is divided into a single user MIMO (SU-MIMO), a 1:1 transmission, and a multi-user-MIMO (MU-MIMO) in which multiple frames are simultaneously transmitted to several users by using spatial division multiple access (SDMA). In 802.11ac, when SU-MIMO is used, length information may be included in an SIG field for 802.11ac to inform a receiver about the length of a frame. However, when MU-MIMO is used, since the length of each of the frames transferred to several users may be different, a different method for informing each user about the end of a pertinent frame is required.

When a MU-MIMO downlink transmission section ends, reception those which require a response, among reception terminals (e.g., STAs), may sequentially transmit an ACK protocol to a transmission terminal (e.g., AP). Here, various methods may be used to inform each of the reception terminals about the order and a transmission reference time for transmitting an ACK protocol. For example, information regarding the ACK protocol transmission order may be provided to each of the reception terminals by using a previously transmitted frame. Also, in order to inform each of the reception terminals about a transmission reference time, transmission duration information indicating a point in time at which an MU-MIMO downlink transmission section ends may be included in an SIG field for 802.11ac, whereby information regarding the length of a PPDU transmitted during the longest period of time can be provided to each of the reception terminals. In the case of using such an SIG field, even when a certain reception terminal is allocated a spatial stream having a short length, an actual channel performs transmission during the longest spatial stream, so the channel is in a busy state. When a frame reception of a reception terminal which receives the longest PPDU is terminated, the channel becomes idle, and thereafter, each of the reception terminals transmits an ACK protocol to the transmission terminal according to a determined procedure.

One of the methods for indicating the end of a frame by using a delimiter is recognizing a maximum number of symbols of MU-MIMO transmission through transmission duration information and filling up up to the last symbol of a frame with delimiter padding, MAC padding, and PHY padding. A PHY service data unit (PSDU) transferred from the MAC layer to the PHY layer includes useful data and padding information, and the delimiter padding and MAC padding are classified as non-useful data.

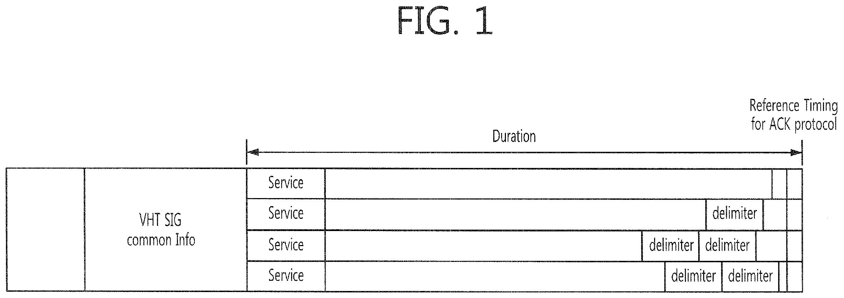

FIG 1 shows a method for indicating the end of a frame by using transmission duration and frame padding. When a transmitter transmits a frame by using frame padding as shown in FIG 1, a PHY layer of a receiver cannot know the length of useful data. Thus, a decoder of the PHY layer of the receiver restores delimiter padding, MAC padding, and the last PHY pad bit excluding a tail of the last symbol, as well as the useful data of the received frame. Here, when the PHY pad bit has a size of 7 bits or smaller, which fails to constitute 1 octet, it is discarded, and then other restored data is transferred to a MAC layer. As a result, the PHY layer of the receiver cannot transfer the length of the useful data to the MAC layer through RX VECTOR.

Here, the MAC layer receives a padded MAC frame. Thus, the MAC layer cannot recognize the end of the received frame until it parses the last delimiter of the frame, so it can accurately restore the MAC frame after recognizing the end of the frame. In this method, the length of the frame extends by using a null delimiter applied to the A-MPDU of 802.11n, so in the MAC frame, only A-MPDU, rather than MPDU, should be necessarily used.

In this manner, in the communication method using MIMO, in particular, MU-MIMO, in order to allow the receiver to effectively restore the frame, the information regarding the end of the transmitted frame is required to be accurately provided to the receiver. The present invention relates to a method and apparatus for accurately informing a receiver about the end of a transmitted frame, to thus allow the receiver to effectively restore the frame.

The present invention will now be described in detail through the embodiments.

In MU-MIMO, frames, each having a different length, are simultaneously transmitted to several users, and each frame is transmitted to a reception terminal of each user through beamforming. Here, in order to inform each reception terminal about the end of a frame, the following two methods may be used.

The first method is including, by a PHY layer of a transmitter, a length field in an SIG field or a service field, of each user. The second method is filling, by a MAC layer, a remaining frame with padding information such that it has the same number of OFDM symbols as that of the longest frame among transmitted frames, and transferring the same to the PHY layer. Then, the PHY layer includes information regarding the number of OFDM symbols of each frame in an SIG field, and a MAC layer of a receiver may recognize the end of a received frame by frame parsing.

In the MU-MIMO transmission section, in order to inform the receiver about the end of transmission and the end of MU-MIMO spatial stream, a transmission duration and frame length information are used. When a signal field is transmitted to multiple users, information commonly required for the users is included in a common signal field and information regarding each user is included in a dedicated signal field and transmitted. The transmission duration information is common information of all the terminal participating in the MU-MIMO transmission must know for a clear channel assessment (CCA) deferral, so it is included in the common signal field. Meanwhile, since the lengths of the respective frames are different, the frame length information may be included in per-user information (or per-user info) of the dedicated signal field, e.g., a VHT-SIG field.

Here, the length information may be 1) length information of PSDU, 2) length information of A-MPDU or MPDU among elements constituting the PSDU, or 3) length information of A-MPDU or MPDU, actual data information among MAC padding information. The types of such length information represent an embodiment of the present invention, and various types of information can be expressed according to length expression methods.

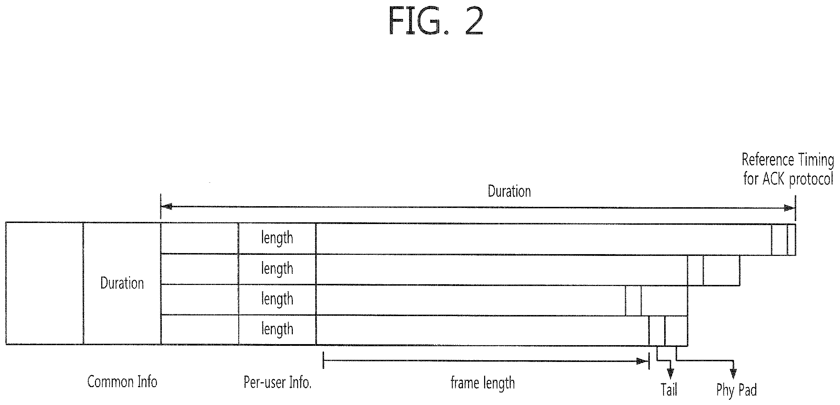

FIG 2 shows an embodiment in which information regarding the end of a frame is provided to a receiver by using transmission duration information and frame length information according to an embodiment of the present invention. In the present embodiment, when the transmitter transmits a frame, it includes transmission duration information and frame length information in the VHT-SIG field and transmits the same. The PHY layer of the receiver recognizes a transmission termination time (or a transmitter time) through the transmission duration information and transfers it to the MAC layer. Here, the PHY layer informs the MAC layer about a reference time through an RX-VECTOR or a CCA idle event, and the MAC layer calculates a time at which an ACK protocol is to be transmitted to the transmission terminal by using reference time information.

Also, the PHY layer of the receiver restores the length information and the decoder restores the data by using the restored length information. Here, the MAC layer knows the accurate length of the frame through RX-VECTOR, so there is no need to perform additional delimiter matching in a MAC protocol.

In the embodiment of FIG 2, the receiver can know the actual length information of the frame by using the length information, the PHY layer can perform decoding only by the designated length and terminate it. Thus, power and time required for decoding can be reduced. Also, the MAC layer does not perform delimiter parsing, the same effect can be obtained.

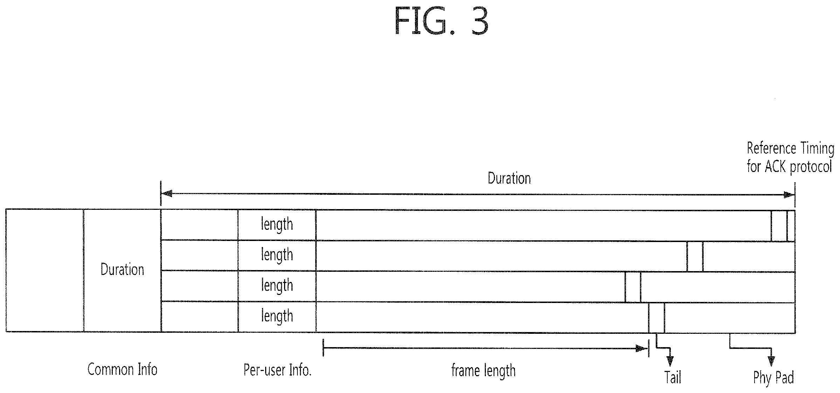

FIG 3 shows another embodiment in which information regarding the end of a frame is provided to a receiver by using transmission duration information and frame length information according to an embodiment of the present invention. When transmission of a short stream is first finished in the MU-MIMO transmission section, transmission power of the transmitter is reduced. Accordingly, reception power is also reduced when a corresponding signal is restored in the receiver, and in this case, a problem may arise with a detection of a signal which has not been completely received yet (namely, which is longer than other signals) in the receiver.

Thus, in order to solve the problem, the transmitter fills a spatial stream of each of the other remaining frames, based on a frame having the longest transmission duration, with PHY pad. As a result, frames having the same transmission duration are generated as shown in FIG 3, so the transmitter can transmit the frames in the transmission duration period by using uniform power. The receiver can stably detect data from a spatial stream having the longest frame, and the reception terminal which receives a short spatial stream does not perform unnecessary decoding through the length information. Here, the PHY pad inserted in the transmitted does not affect the detection of the end of the frame in the receiver.

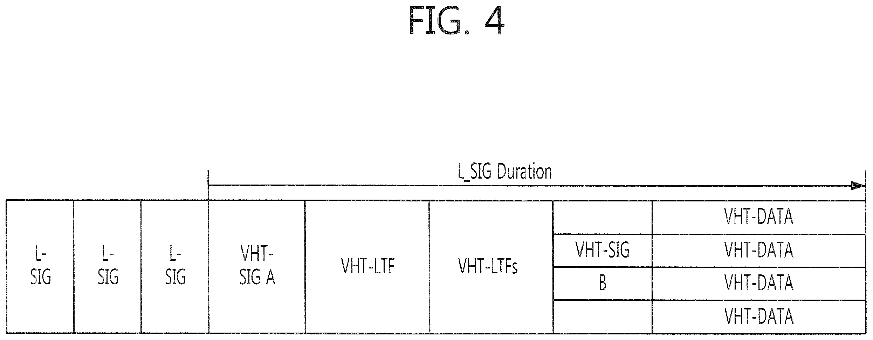

FIG 4 shows a PPDU format of MU-MIMO to which a data transmission and reception method according to an embodiment of the present invention is applied. In FIG 4, an L-STF field, an L-LTF field, and an L-SIG field are the same as those of 802.11a/g. Meanwhile, a VHT-SIG A field includes information commonly applied to every user frame, and a VHT-SIG B field provides information required for each user.

In FIG 4, the VHT-SIG field includes the VHT-SIG A field and the VHT-SIG B field in both SU-MIMO and MU-MIMO systems. The VHT-SIG A and the VHT-SIG B fields are modulated according to BPSK and have a long guard interval.

The VHT-SIG A field has common information applied to every terminal which receives the PPDU. Meanwhile, in the MU-MIMO system, the VHT-SIG B field includes information applied to individual users, respectively, and is transmitted to each user through spatial multiplexing. Multiple users for simultaneous transmission may be limited to four users.

Table 1 below shows the configuration of the VHT-SIG B field used in the SU-MIMO and MU-MIMO systems.

**[Table 2]**

| SIG B Fields | MU - Bit allocation | | | SU - Bit allocation | | |
|---|---|---|---|---|---|---|
| | 20MHz | 40MHz | 80MHz | 20MHz | 40MHz | 80MHz |
| DWORD(4bytes) Length | 16 | 17* | 19* | 17 | 19 | 21 |
| MCS | 4 | 4 | 4 | - | - | - |
| RSVD | 0 | 0 | 0 | 2 | 2 | 2 |
| Tail | 6 | 6 | 6 | 6 | 6 | 6 |
| Total # bits | 26 | 27** | 29** | 26 | 27** | 29** |

The VHT-SIG B is modulated according to BPSK. In an embodiment of the present invention, the transmission terminal may variably use a frequency band in data transmission. The number of bits allocated to the VHT-SIG B varies according to a frequency band applied to data transmission. For example, in a 20 MHz mode, 26 bits are allocated to the VHT-SIG B, and in a mode higher than 20 MHz, a frequency tone is added according to channel bonding, so additional bits, besides 26 bits, are allocated. For example, in a 40 MHz mode, 54 bits, the same as those of 802.11n, may be used, and when it is converted into 20 MHz, 27 bits may be used. In an 80 MHz mode, 117 bits may be used, and when it is converted into 20 MHz, 29 bits may be used.

In this manner, as the bandwidth of frequency used for data transmission increases, the amount of transmitted data is also increased, and accordingly, the length of a field representing the length of a frame is to be increased. In order to support the maximum packet duration (5.46 ms) which can be defined in the L-SIG field by a frequency band, bits for defining DWORD are additionally required according to the increase in the band size. Table 1 shows the configuration of the VHT-SIG B field reflecting bits additionally allocated through channel bonding according to each bandwidth.

In the PPDU format of FIG 4, VHT-DATA is data processed according to a modulation and coding scheme (MCS) of each user, which includes a service field, a PSDU field, a tail field, and a PHY pad field.

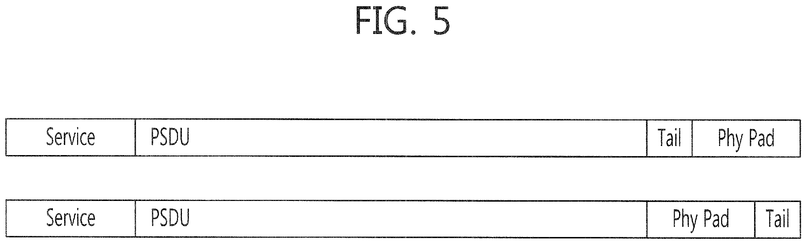

FIG 5 shows the configuration of the VHT-DATA field according to an embodiment of the present invention. The tail field may be positioned immediately behind the PSDU field or may be positioned at the end of the entire VHT-DATA field according to the method for designating the length. In the latter case, the position of the tail field can be accurately recognized by using the number of symbols and an Ndbps value.

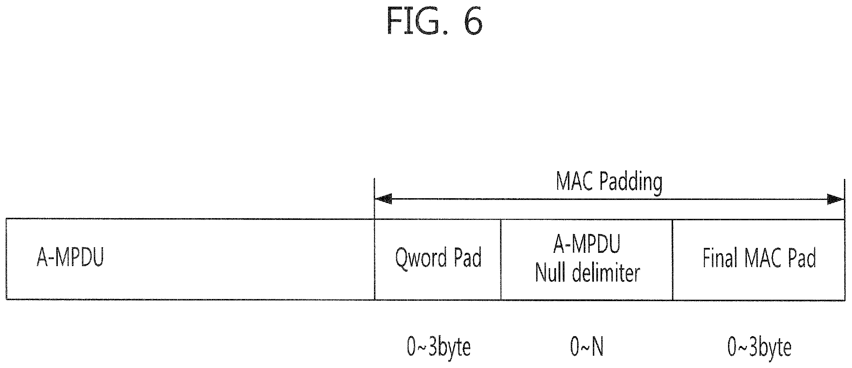

FIG 6 shows a format of the PSDU included in the VHT-DATA field in FIG 5. In FIG 6, a Qword Pad field, an A-MPDU null delimiter, a final MAC pad field may be selectively added after the A-MPDU. The Qword pad field has the size of a multiple of 4 bytes. The A-MPDU null delimiter is added by the size designated in units of 4 bytes in a 4-byte boundary. The final MAC pad fills a remaining area, failing to reach 4 bytes, with bytes by a designated size.

Hereinafter, diverse representation methods of length information designating the length of a frame included in the PSDU will be described.

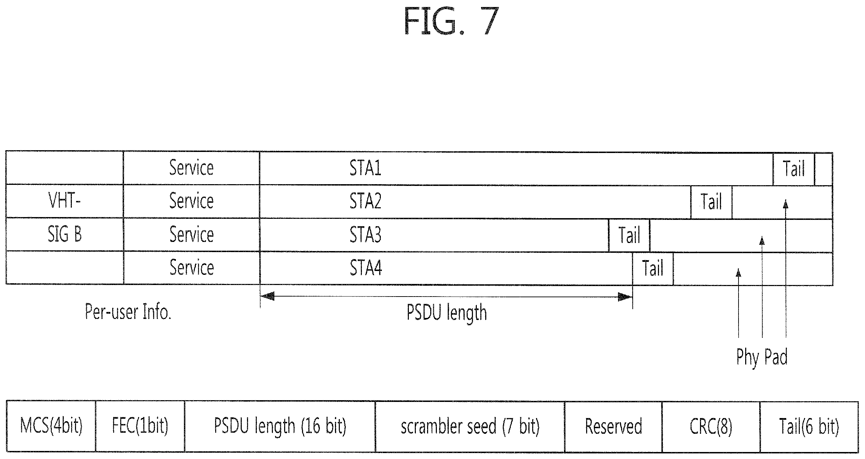

FIG 7 shows an embodiment in which length information of the PSDU is designated in the VHT SIG-B according to the present invention. In FIG 7, the length of a frame of each user can be indicated by the VHT-SIG B field, the tail field may be present immediately after the PSDU. The VHT-SIG B field is modulated by BPSK 1/2, having high reliability, and accordingly an error probability of length information is reduced.

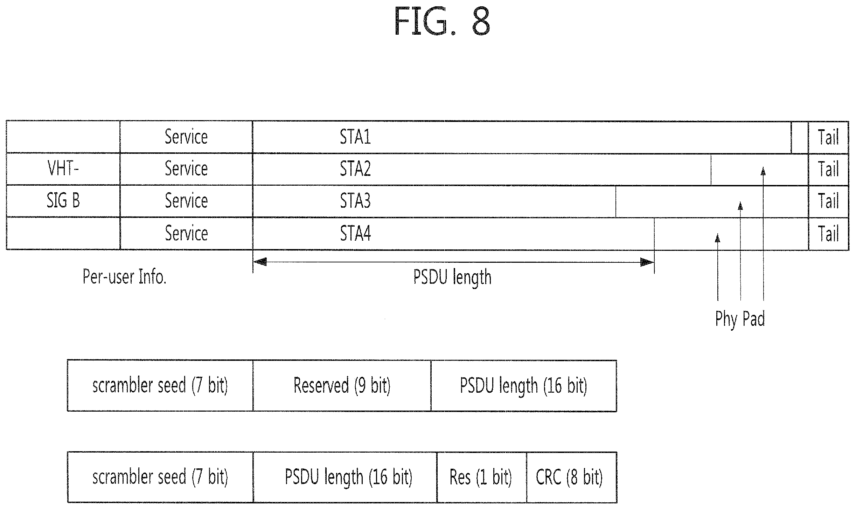

FIG 8 shows an embodiment in which length information is designated by using a service field according to the present invention. In FIG 8, the length information (PSDU length) is included in the service field of the VHT-DATA field. Here, the service field extends from 16 bits to 32 bits.

As shown in FIG 8, the service field may be configured according to the following two methods.
1) $Service field = Scramble Seed \left(7 bits\right) + Reserved \left(9 bits\right) + User Length \left(16 bits\right)$
2) $Service field = Scramble Seed \left(7 bits\right) + User Length \left(16 bits\right) + CRC \left(8 bits\right)$

The length information appears after a decoding operation in the service field, so it is positioned at the end of the DATA field. When the service field includes a cyclic redundancy check (CRC), if a CRC error occurs, data processing in the PHY layer is stopped, obtaining power saving effect in the PHY and MAC layers.

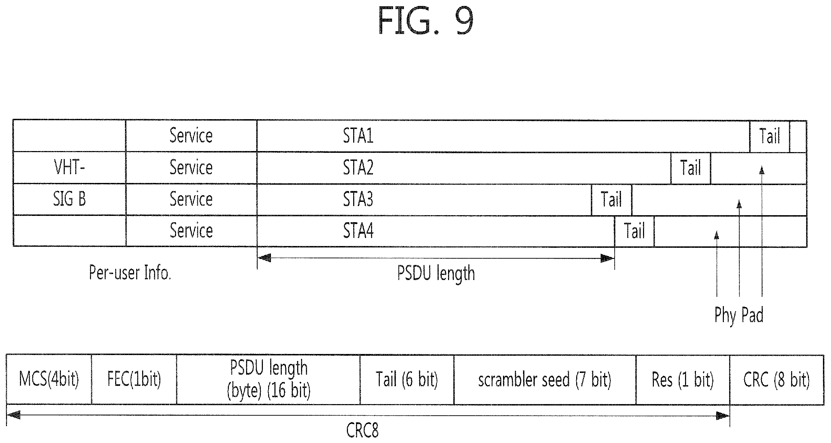

FIG 9 shows an embodiment in which length information is designated by using both the VHT-SIG B field and the service field according to the present invention. The VHT-SIG B field has a limited size, so it cannot include a CRC field for error detection. When BPSK 1/2 modulation is employed, the VHT-SIG B field has a size of 24 bits or 26 bits. When the PSDU length information is included in the VHT-SIG B a shown in FIG 9, the CRC field may be included in the service field to reduce overhead of the VHT-SIG B. The CRC field having the size of 8 bits is applied to every field of the VHT-SIG B field, a scrambler seed field of the service field, and reserved bits. By protecting the respective fields by using the CRC field, an error detection probability can be enhanced and unnecessary data processing from the PHY layer can be prevented.

In the foregoing embodiment, the CRC field included in the service field can be applied as in the following two embodiments.
1) CRC is applied to MCS, FEC, PSDU length and scrambler seed fields
2) CRC is applied to MCS, FEC, PSDU length fields, excluding service field

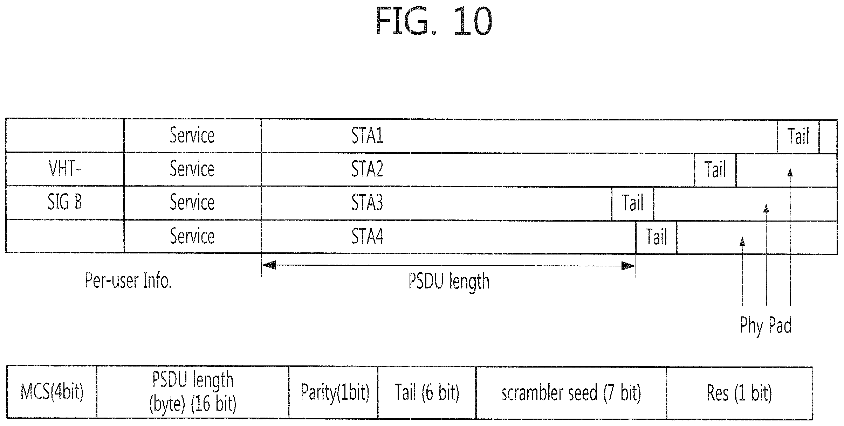

FIG 10 shows an embodiment in which a length field of the PSDU is protected by using a parity bit according to the present invention. As shown in FIG. 10, a parity bit (1 bit) may be added behind the PSDU length field to reduce an error in restoring and detecting the PSDU length field.

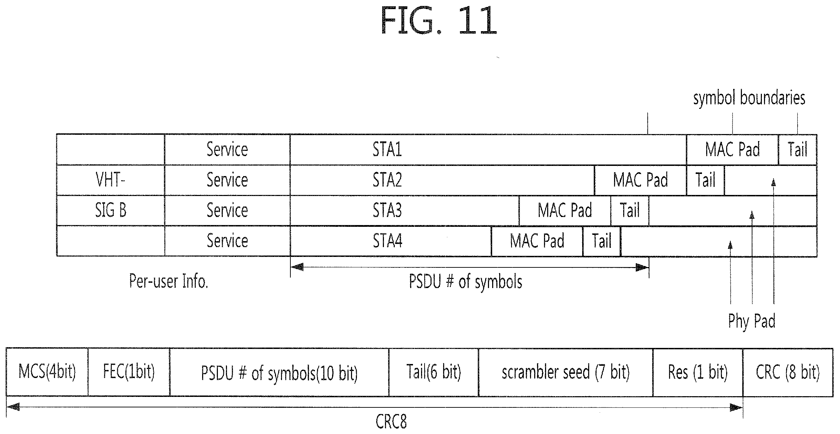

FIG 11 shows an embodiment in which a symbol length of each user is transferred to the receiver according to the present invention. Unlike the foregoing embodiment, in the embodiment of FIG 11, information regarding the length up to the last symbol including a portion of the PSDU, rather than information regarding the length of the PSDU, is transferred. In this embodiment, the position of the tail field may vary according to the number of symbols occupied by a user frame. In order for a PHY pad field belonging to the last symbol occupied by the PSDU to have a size of 0 to 7 bits, a MAC pad field is padded in units of bytes (See FIG 6). When the length information is transmitted in units of symbols as in the present embodiment, reserved bits existing in the VHT-SIG B field may be used for a different purpose. Meanwhile, when the MAC pad field is included as shown in FIG 11, information included in the MAC pad field must be parsed after the PSDU is transferred to the MAC layer of the receiver, potentially generating overhead.

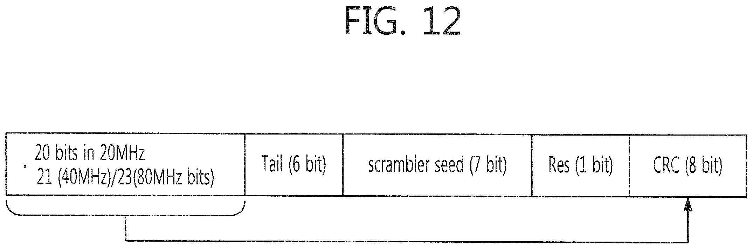

FIG 12 shows a method for protecting the VHT-SIG B field in the embodiment of FIG 11. As shown in FIG 12, the transmitter includes the CRC field in the service field. Here, the CRC field is calculated based on the VHT-SIG B (excluding the tail field) and inserted into the MSB 8 bits of the service field. Namely, the scrambler seed field is not considered in calculating the CRC field. The service field and the PSDU may be scrambled in the same manner as that of 802.11n.

The CRC field calculated thusly has an effect of protecting an initial state of a scrambler, as well as protecting the VHT-SIG B field. If the CRC field is calculated in consideration of even the scrambler seed field, if there is an error in the initial state of the scrambler, the CRC field has an error after descrambling. Then, a CRC with respect to the VHT-SIG B field also fails. Thus, the CRC field calculated as described above has the effect of detecting even an error of the scrambler.

For reference, the number of octets calculated according to the length field of the VHT-SIG B field cannot be greater, by 3 octets or more, than the number of octets calculated by the L-SIG length and MCS field of the VHT-SIG B field.

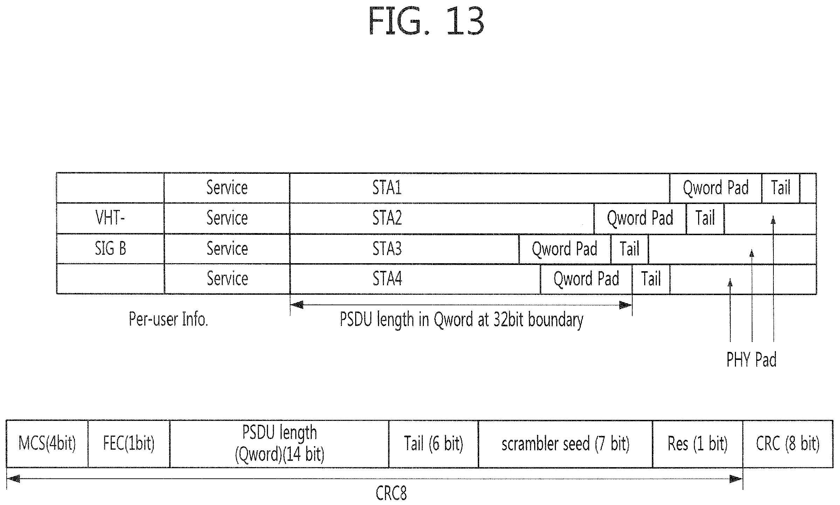

FIG 13 shows an embodiment in which the length information of the PSDU is transmitted in units of Qword (4 bytes) according to the present invention. In the embodiment of FIG 12, the length information of the PSDU is transmitted by Qword (4 bytes), rather than by byte or symbol. When the length information is transmitted by Qword, the size of the length field is reduced by 2 bits in comparison to the case in which the size of the length field is transmitted by byte. Here, like the embodiment of FIG 6, the PSDU has a form in which only the Qword pad field is added to the A-MPDU. In the present embodiment, the last Qword has a value of 3 bytes or smaller. Thus, the MAC layer of the receiver does not need to parse the last Qword in parsing the A-MPDU, reducing overhead as compared with the embodiment of FIG 11.

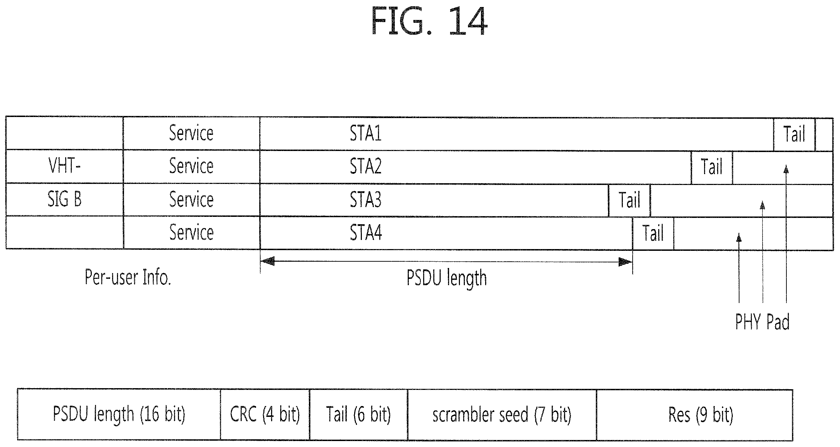

FIG 14 shows an embodiment in which only the length information of the PSDU is included in the VHT-SIG B field according to the present invention. In the embodiment of FIG 14, only the PSDU length field, the CRC field, and the tail field are included in the VHT-SIG B field having the size of 26 bits. In the present embodiment, the PSDU may be an A-MPDU having a length by byte or may be an (A-MPDU + Qword pad) having a length by Qword. Also, in the present embodiment, the PSDU length field can be protected by the CRC field.

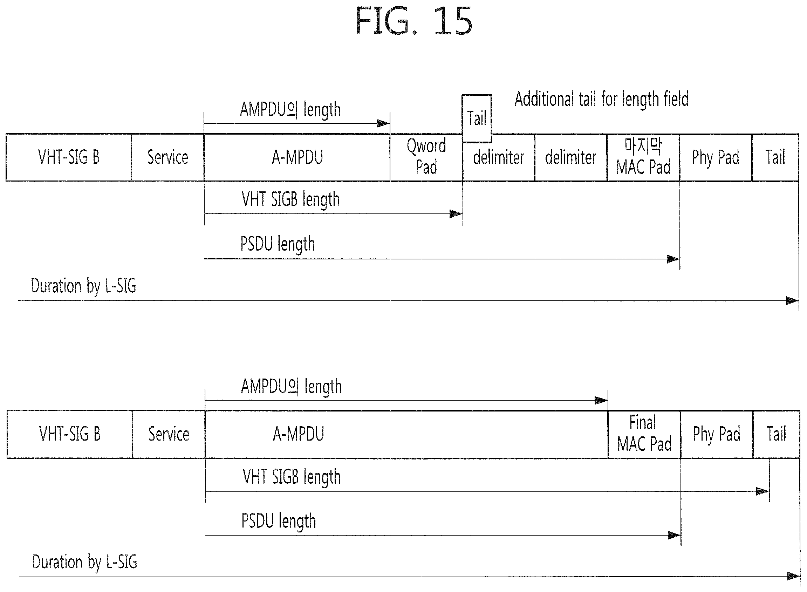

Hereinafter, a method for indicating the end of a frame by using the L-SIG transmission duration field of FIG 4 and the MAC padding scheme of FIG 6 will be described with reference to FIG 15. Also, a method of combining a length indication of each user by using length information having the Qword boundary described above in the embodiment of FIG 11 will also be described with reference to FIG. 15.

FIG 15 shows an embodiment in which length information is represented by combining a MAC padding scheme and a length indication scheme according the present invention. As shown in FIG 15, when the two methods are combined, a method of using one tail field and a method of using two tail fields can be applied.

In case in which the number of tail fields is one as shown in the frame illustrated at a lower portion in FIG 15, the VHT DATA field includes service, PSDU, PHY pad, and tail pad in this order. In this case, the PHY layer performs tracing back by using the tail information at the last position, a Viterbi decoder has processing delay to the last. Also, the decoder cannot terminate decoding until it restores data by the length designated in the VHT-SIG B length field. The data decoded by the length designated in the VHT-SIG B length field in the PHY layer is transferred to the MAC layer, and the length of the received frame has a size of Ceiling(A-MPDU_Length/4)*4 (Here, Ceiling() refers to a Ceiling function). In this case, the VHT-SIG B length indicates the length of the A-MPDU and Qword pad included in the PSDU format of FIG. 6.

When there is an additional tail field as shown in the frame illustrated at an upper portion in FIG 15, the tail field may be added to the Qword boundary when the frame is decoded by using the length field in the receiver, thereby removing delay by the length of tracing back in a BCC decoder. Thus, the decoding of the decoder can be terminated faster. When the data is transferred from the PHY layer to the MAC layer, the data can be transferred to the MAC layer as fast as the length or tracing back, and accordingly, the MAC layer can have a gain in terms of the frame processing time.

Meanwhile, when a frame is transferred by using only the L-SIG transmission duration and the MAC padding information without using the length information of each user, the PSDU including MAC padding is entirely transferred to the MAC layer of the receiver. Thus, the MAC layer performs parsing even on the MAC padding, generating overhead.

In the embodiment of FIG 15, the transmitter configures the PSDU as follows.
1) L_ampdu_x: length of A-MPDU of user x (byte unit)
2) L_psdu_x: A-MPDU of user x + length (byte unit) of PSDU including MAC padding according to FIG 6
3) Ndpbs_x: a number of data bits per symbol, value (bit unit) of user x according to MCS
4) Nsym: a number of symbols
5) L_padding_x: length (byte unit) (Qword pad, null delimiter) of MAC pad according to MAC padding scheme of FIG 6, final MAC pad
6) Nes: anumber of BCC encoders
7) n number of user frames

Meanwhile, the MAC layer performs the MAC padding of FIG 6 as follows.
1) $Nsym_x = Ceiling \left(\left(16+8\times L_ampdu_x+6*Nes\right)/Ndpbs_x\right)$
2) $Nsym = max \left(Nsym_1,…, Nsym_n\right)$
3) $L_padding_x = round \left(\left(Nsym\times Ndpbs_x-16-6*Nes\right)/8\right) - L_ampdu_x$

Here, L_padding_x designates the size of MAC padding to be included for the user x. In the above process, a PSDU for the user x is generated by inserting an appropriate padding according to the size of L_padding_x and the boundary of L_ampdu_x.

Meanwhile, a padding insertion algorithm of the MAC layer is as follows.

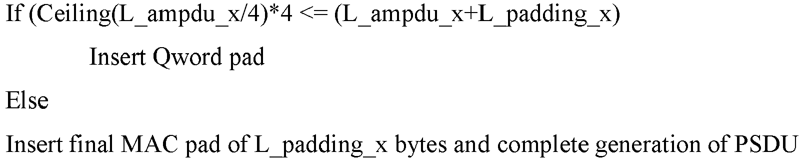

When a remaining padding space is greater than or equal to 4 bytes, a null delimiter in units of 4 bytes is inserted. Also, when a space of 3 bytes or smaller remains, a byte final MAC pad is inserted to complete the generation of PSDU.

The MAC layer of the transmitter transmits Nsym, L_ampdu_x, MCS per user, and PSDU per user to the PHY layer through the TXVECTOR. The PHY layer of the transmitter inserts a PHY pad by Npad_x and inserts a tail pad having the size of 6*Nes according to the results of the following formula.

L_qwordinB: It is value indicating A-MPDU length by Qword in the Qword boundary and is transmitted through VHT-SIG B
Npad_x: length (bit unit) of PHY pad of user x 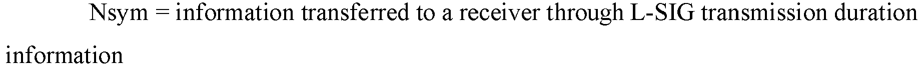 Nsym = information transferred to a receiver through L-SIG transmission duration information $Ndata_x = Nsym \times Ndbps_x$ $Npad_x = \left(Ndata_x-\left(16+6*Nes\right)\right) % 8 ; PHY Pad \left(0∼7\right)$ $L_qwordinB = Ceiling \left(L_ampdu_x/4\right)$

When an additional tail pad is required, a position to be substituted by the tail pad is determined according to the following conditions.

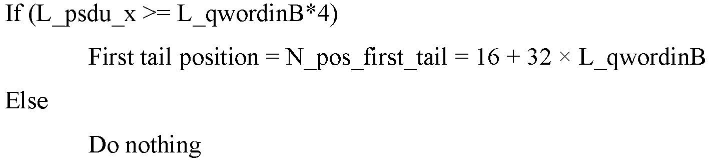

The additional tail pad substitutes MAC padding, so the A-MPDU, an actual user frame, is transferred as it is. The MAC padding is merely padding information, rather than meaningful data, so it does not affect the user data transmission. In case in which a front portion of a first null delimiter of the MAC padding is substituted, when only the L-SIG transmission duration and the MAC padding are used, the null delimiter is recognized as an error and the procedure is continuously performed until a next null delimiter.

The position to be substituted by the last tail pad is determined by following formula.$Second tail position = N_pos_second_tail = Ndata_x - 6 * Nes$

The receiver can discriminate the length of a user frame as follows according to a method of detecting the end of the frame. Here, the size of data transferred to the MAC layer is determined according to the length of the user frame.

In the reception terminal using the VHT-SIG B length information of each user, Rx Vector Length, the length of the user frame, transferred to the MAC layer is determined by the following formula.

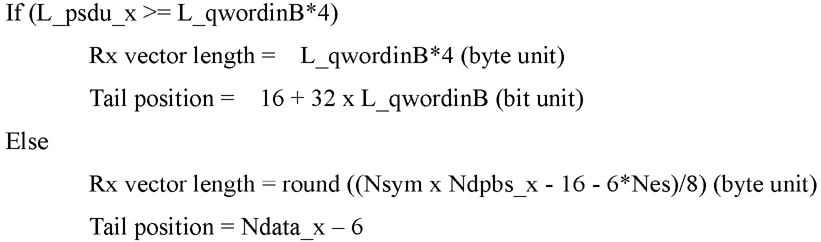

When the MAC padding is applied to the L-SIG transmission duration, Rx Vector Length, the length of the user frame, transferred to the MAC layer in the receiver is determined by the following equation.$Rx vector length = round \left(\left(Nsym\times Ndpbs_x-16-6*Nes\right)/8\right) \left(byte unit\right)$ $Tail position = Ndata_x - 6$

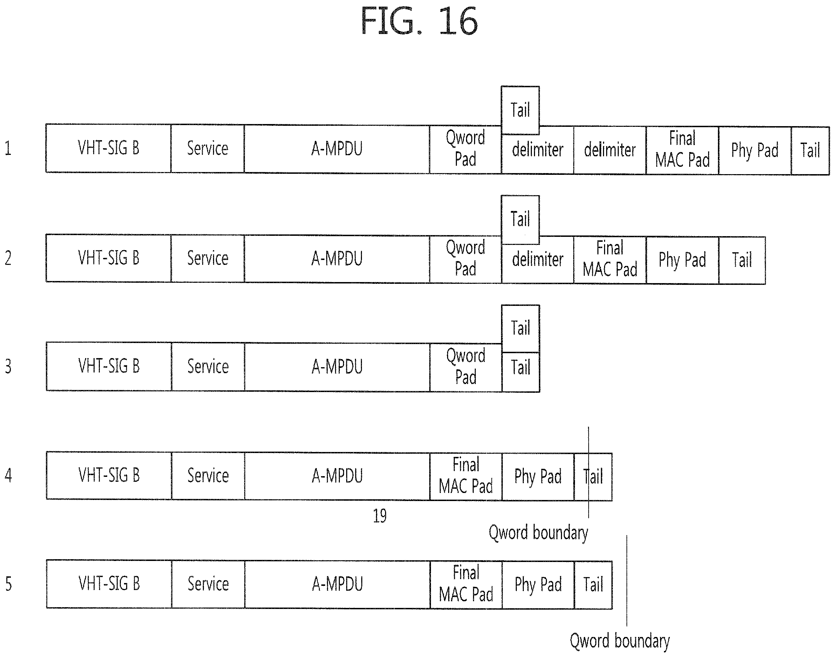

FIG 16 shows embodiments in which the additional tail pad of FIG 15 is substituted according to the present invention.

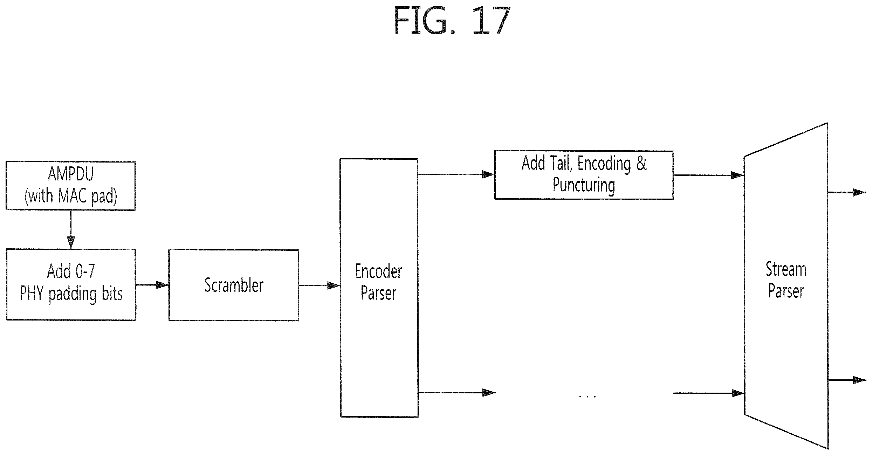

FIG 17 is a block diagram for explaining an insertion of the PHY pad performed in a PHY layer. When the MAC pad and the PHY pad bits are included, BCC and LDPC codes are required to be all encoded. Thus, the PHY pad is inserted before scrambler. Upon receiving the frame generated thusly, a decoder of the receiver performs decoding by using the length information of the VHT-SIG B field, so the PHY layer can obtain power saving effect.

In the case of encoding using BCC, as shown in FIG 17, the PHY pad (0~7 bits) is positioned behind the PSDU, and thereafter, the tail bits (6NES bits) are added. The padding bits are added in front of the scrambler, and the six tail bits are added before each encoder. The LDPC code does not have a tail bit like in 802.11n.

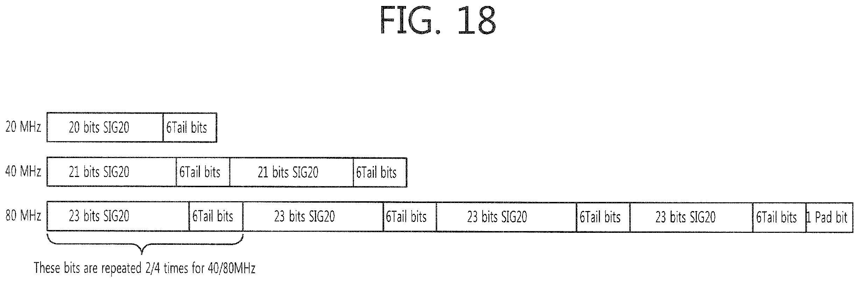

FIG 18 shows a modulation scheme of the VHT-SIG B and a data representation scheme according to a bandwidth. As described above, in an embodiment of the present invention, the transmission terminal can variably use a frequency band in transmitting data. FIG 18 shows VHT-SIG B field configurations when frequency bands applied for transmission are 20 MHz, 40 MHz, and 80 MHz, respectively. In FIG 18, each VHT-SIG B includes an SIG20 field converted into 20 MHz and a tail field having the size of 6 bits.

As shown in FIG 18, in the 40 MHz and 80 MHz modes, the information of the VHT-SIG B field including the tail field is iterated. Although not shown in FIG 18, when frequency is 160 MHz, VHT-SIG B of 80 MHz is iterated twice.

As the VHT-SIG B field is iterated in the 40 MHz and 80 MHz modes, an error restoration probability can be enhanced through repetition code in the receiver. Namely, the decoder of the reception terminal can iteratively use the value obtained through decoding, thereby effectively enhance an error decision value used in a decoder input.

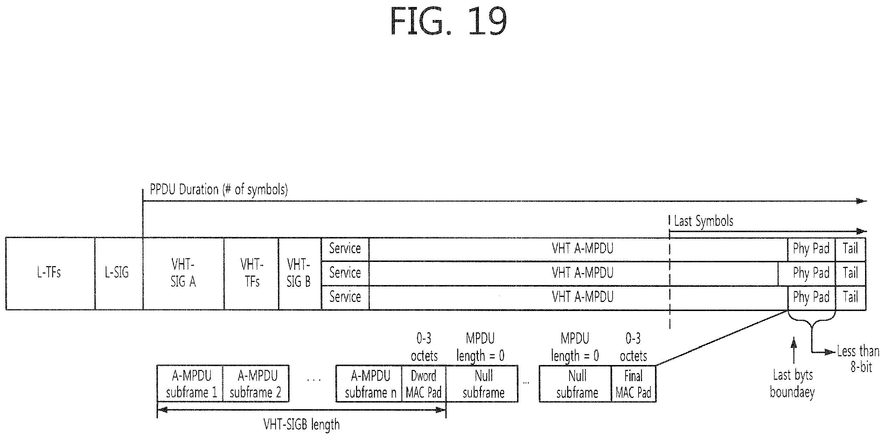

FIG 19 illustrates the PPDU format according to an embodiment of the present invention. As shown in FIG 19, the reception terminal sets CCA deferral by using the LSIG-LENGTH transmission duration information and performs L-SIG protection. Length and rate information included in the L-SIG field of FIG 19 designates a transmission duration of the PPDU, and in case of OFDM symbols having a long guard interval, the length and rate information included in the L-SIG field of FIG 19 designate the number of symbols.

The MAC layer provides a VHT A-MPDU included in the last byte of each user stream. The same preamble structure and the same VHT A-MPDU format are used in the VHT-frame of a single user (SU) and multiple users (MU). Here, since the A-MPDU is used all the time, an aggregation bit indicating whether or not the A-MPDU is used is not included in the VHT-SIG field. The PHY layer provides a PHY pad of 0 to 7 bits. The PHY pad is positioned in front of the tail field.

The PHY layer of the reception terminal decodes only the useful data part by using the DWORD length included in the VHT-SIG B and the transfers the same to the MAC layer. Here, a delimiter and a padding part behind the useful data are not decoded and PHY processing is stopped, obtaining a power saving effect.

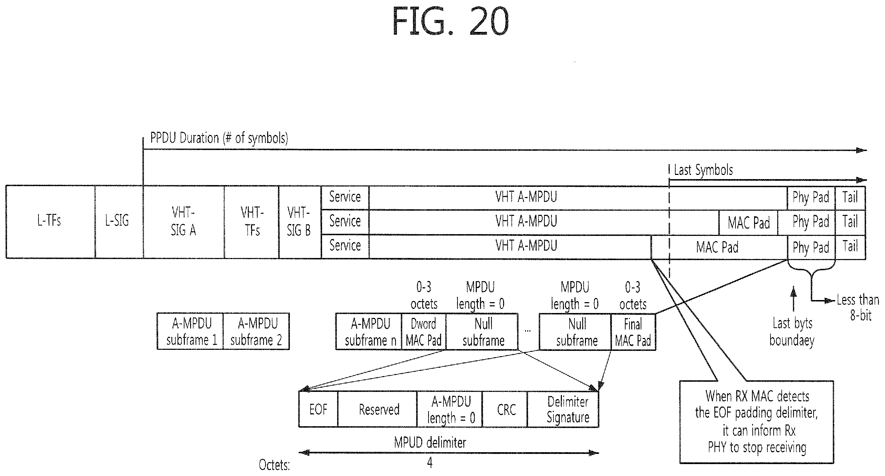

FIG 20 illustrates a PPDU format according to another embodiment of the present invention.

The use of the length field of VHT-SIG B as shown in FIG. 19 can obtain a power saving effect in the PHY layer. Meanwhile, the use of the PPDU format as shown in FIG 20 can obtain a power saving effect even in the MAC layer.

In FIG 20, a Null subframe positioned at the end of the A-MPDU is used as a special padding delimiter having EOF flag information. When the MAC layer of the receiver detects the padding null delimiter including the EOF flag, the MAC layer transmits an operation stop signal to the PHY layer, obtaining a power saving effect.

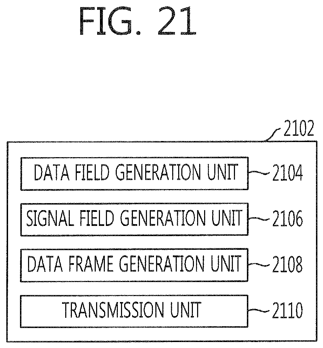

FIG 21 shows the configuration of a transmission terminal according to an embodiment of the present invention.

A transmission terminal 2102 includes a data field generation unit 2104, a signal field generation unit 2106, a data frame generation unit 2108, and a transmission unit 2110. The data field generation unit 2104 generates a data field including data (e.g., A-MPDU) desired to be transmitted to a reception terminal. Here, the data field may include a service field and a PHY service data unit (PSDU) field, and the PSDU field may include data desired to be transmitted to the reception terminal.

The data field generation unit 2104 may generate a PSDU field as described above in the embodiment of FIG 15. The data field generation unit 2104 first calculates the size of an MAC padding to be added behind the data included in the PSDU as follows.
1) $Nsym_x = Ceiling \left(\left(16+8\times L_ampdu_x+6*Nes\right)/Ndpbs_x\right)$
2) $Nsym = max \left(Nsym_1,…, Nsym_n\right)$
3) $L_padding_x = round \left(\left(Nsym\times Ndpbs_x-16-6*Nes\right)/8\right) - L_ampdu_x$

Thereafter, the data field generation unit 2104 adds a Qword pad, a Null delimiter, and a final MAC pad behind the data according to the size of the MAC padding as follows.

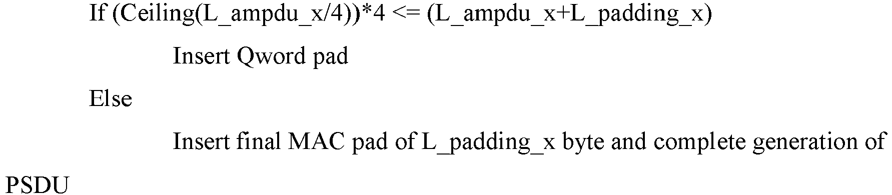

When a remaining padding space is greater than or equal to 4 bytes, the data field generation unit 2104 inserts a null delimiter in units of 4 bytes. Also, when a space of 3 bytes or smaller remains, the data field generation unit 2104 inserts a byte final MAC pad and completes the generation of the PSDU.

The signal field generation unit 2106 generates a signal field including information regarding the data field generated by the data field generation unit 2104. Here, the signal field may include a length field designating the size of the data and Qword pad included the PSDU field. Also, the signal field may further include a modulation and coding scheme (MCS) field including information regarding a modulation and coding method of the data field. Also, the service field may include a CRC bit calculated based on the information included in the signal field.

The data frame generation unit 2108 generates a data frame including the generated data field and signal field. The transmission unit 2110 transmits the data frame generated by the data frame generation unit 2108 to the reception terminal.

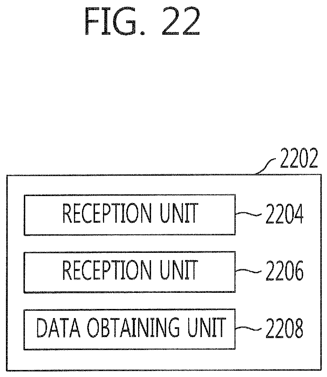

FIG 22 shows the configuration of a reception terminal according to an embodiment of the present invention.

A reception terminal 2202 includes a reception unit 2204, a decoding unit 2206, and a data obtaining unit 2208. The reception unit 2204 receives a data frame including a data field including data (e.g., an A-MPDU) intended to be transmitted by a transmission terminal and a signal field including information regarding the data field from the transmission terminal.

The decoding unit 2206 decodes the data frame received by the reception unit 2204 and outputs the signal field and the data field. Respective fields included in the signal field and the data field have been described above with reference to FIG. 21.

The data obtaining unit 2208 obtains the data from the data field by using the signal field output by the decoding unit 2206.

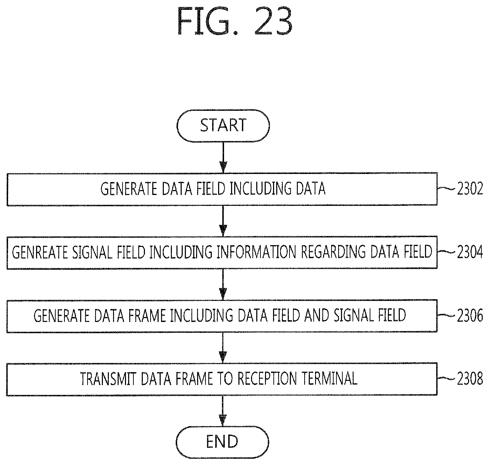

FIG 23 is a flow chart illustrating a process of a data transmission method according to an embodiment of the present invention.

First, a data field including data (e.g., an A-MPDU) intended to be transmitted to a reception terminal is generated (2302). A signal field including information regarding the generated data field is generated (2304). Thereafter, a data frame including the generated data field and signal field is generated (2306).

Here, the data field includes a service field and a PSDU field, and the PSDU field includes the data intended to be transmitted to the reception terminal. Also, the PSDU field includes the data intended to be transmitted to the reception terminal and a Qword pad, a Null delimiter, and a final MAC pad added behind the data. Also, the signal field may include a length field designating the size of the data and the Qword pad included in the PSDU field and an MCS field including information regarding a modulation and coding method of the data field. Also, the service field may include CRC bits calculated based on the information included in the signal field.

Finally, the generated data frame is transmitted to the reception terminal (2308).

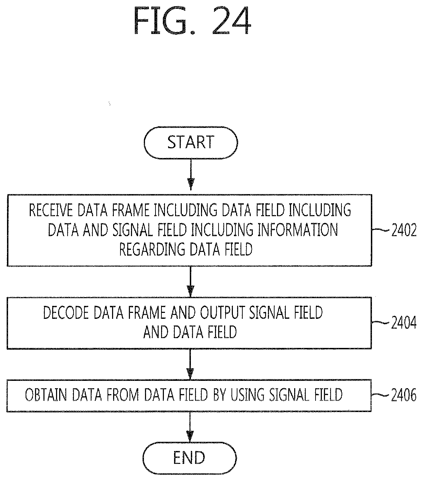

FIG 24 is a flow chart illustrating a process of a data reception method according to an embodiment of the present invention.

First, a data frame including a data field including data (e.g., A-MPDU) intended to be transmitted by a transmission terminal and a signal field including information regarding the data field is received (2402). The received data frame is decoded to output the signal field and the data field included in the data frame (2404).

Here, the data field includes a service field and a PSDU field, and the PSDU field includes the data intended to be transmitted by a transmission terminal. Also, the PSDU field includes the data intended to be transmitted to a reception terminal and a Qword pad, a Null delimiter, and a final MAC pad added behind the data. Also, the signal field may include a length field designating the size of the data and the Qword pad included in the PSDU field and an MCS field including information regarding a modulation and coding method of the data field. Also, the service field may include CRC bits calculated based on the information included in the signal field.

Finally, the data is obtained from the data field by using the output signal field (2406).

## Claims

1. A communication method comprising:
receiving, at a station, a PLCP protocol data unit, PPDU, wherein the PPDU comprises a L-SIG field, a VHT-SIG A field, a VHT-SIG B field and a scrambled data field; and
descrambling, at the station, the scrambled data field to obtain a service field and an aggregated MAC protocol data unit, A-MPDU,
wherein:
the VHT-SIG B field includes a first set of bits and tail bits,
the first set of bits comprises bits relating to a length of the A-MPDU, and
the service field comprises bits relating to a scrambler and cyclic redundancy check, CRC bits, the CRC bits calculated based on the VHT-SIG B field.

2. The method of claim 1, wherein the VHT-SIG B field comprises modulation information of the A-MPDU.

3. The method of claim 1, wherein the first set of bits and the tail bits are repeated in the VHT-SIG B field if a transmission bandwidth is greater than 20 MHz.

4. The method of claim 3, wherein a number of bits in the first set of bits is determined based on the transmission bandwidth.

5. The method of claim 1, wherein the L-SIG field includes bits relating to a length of the L-SIG field, the VHT-SIG A field, the VHT-SIG B field, and the scrambled data field combined.

6. A communication apparatus comprising:
a circuitry,
wherein the circuitry is configured to:
cause the communication apparatus to receive a PLCP protocol data unit, PPDU, wherein the PPDU comprises a L-SIG field, a VHT-SIG A field, a VHT-SIG B field and a scrambled data field; and
descramble the scrambled data field to obtain a service field and an aggregated MAC protocol data unit, A-MPDU,
wherein:
the VHT-SIG B field includes a first set of bits and tail bits,
the first set of bits comprises bits relating to a length of the A-MPDU, and
the service field comprises bits relating to a scrambler and cyclic redundancy check, CRC, bits, the CRC bits calculated based on the VHT-SIG B field.

7. The communication apparatus of claim 6, wherein the VHT-SIG B field comprises modulation information of the A-MPDU.

8. The communication apparatus of claim 6, wherein the first set of bits and the tail bits are repeated in the VHT-SIG B field if a transmission bandwidth is greater than 20 MHz.

9. The communication apparatus of claim 9, wherein a number of bits in the first set of bits is determined based on the transmission bandwidth.

10. The communication apparatus of claim 6, wherein the L-SIG field includes bits relating to a length of the L-SIG field, the VHT-SIG A field, the VHT-SIG B field, and the scrambled data field combined.

## Patentansprüche

1. Kommunikationsverfahren, das Folgendes umfasst:
Empfangen einer PLCP-Protokolldateneinheit (PPDU) an einer Station, wobei die PPDU ein L-SIG-Feld, ein VHT-SIG-A-Feld, ein VHT-SIG-B-Feld und ein verschlüsseltes Datenfeld umfasst; und
Entschlüsseln des verschlüsselten Datenfeldes an der Station, um ein Dienstfeld und eine aggregierte MAC-Protokolldateneinheit (A-MPDU) zu erhalten,
wobei:
das VHT-SIG-B-Feld einen ersten Satz von Bits und Endbits beinhaltet,
die erste Menge an Bits Bits umfasst, die sich auf eine Länge der A-MPDU beziehen, und
das Dienstfeld Bits umfasst, die sich auf einen Scrambler und eine zyklische Redundanzprüfung (CRC-Bits) beziehen, wobei die CRC-Bits basierend auf dem VHT-SIG-B-Feld berechnet werden.

2. Verfahren nach Anspruch 1, wobei das VHT-SIG-B-Feld Modulationsinformation der A-MPDU umfasst.

3. Verfahren nach Anspruch 1, wobei der erste Satz von Bits und die Endbits im VHT-SIG-B-Feld wiederholt werden, wenn eine Übertragungsbandbreite größer als 20 MHz ist.

4. Verfahren nach Anspruch 3, wobei eine Anzahl von Bits im ersten Satz von Bits basierend auf der Übertragungsbandbreite bestimmt wird.

5. Verfahren nach Anspruch 1, wobei das L-SIG-Feld Bits beinhaltet, die sich auf die Länge des L-SIG-Feldes, des VHT-SIG-A-Feldes, des VHT-SIG-B-Feldes und des verschlüsselten Datenfeldes zusammen beziehen.

6. Kommunikationsvorrichtung, aufweisend:
eine Schaltung,
wobei die Schaltung dazu konfiguriert ist, dass sie:
die Kommunikationsvorrichtung dazu zu veranlassen, eine PLCP-Protokolldateneinheit (PPDU) zu empfangen, wobei die PPDU ein L-SIG-Feld, ein VHT-SIG-A-Feld, ein VHT-SIG-B-Feld und ein verschlüsseltes Datenfeld umfasst; und
das verschlüsselte Datenfeld zu entschlüsseln, um ein Dienstfeld und eine aggregierte MAC-Protokolldateneinheit (A-MPDU) zu erhalten,
wobei:
das VHT-SIG-B-Feld einen ersten Satz von Bits und Endbits beinhaltet,
der erste Satz von Bits Bits umfasst, die sich auf eine Länge der A-MPDU beziehen, und
das Dienstfeld Bits umfasst, die sich auf einen Scrambler und eine zyklische Redundanzprüfung (CRC) beziehen, wobei die CRC-Bits basierend auf dem VHT-SIG-B-Feld berechnet werden.

7. Kommunikationsvorrichtung nach Anspruch 6, wobei das VHT-SIG-B-Feld Modulationsinformationen der A-MPDU umfasst.

8. Kommunikationsvorrichtung nach Anspruch 6, wobei der erste Satz von Bits und die Endbits im VHT-SIG-B-Feld wiederholt werden, wenn eine Übertragungsbandbreite größer als 20 MHz ist.

9. Kommunikationsvorrichtung nach Anspruch 9, wobei eine Anzahl von Bits in dem ersten Satz von Bits basierend auf der Übertragungsbandbreite bestimmt wird.

10. Kommunikationsvorrichtung nach Anspruch 6, wobei das L-SIG-Feld Bits beinhaltet, die sich auf die Länge des L-SIG-Feldes, des VHT-SIG-A-Feldes, des VHT-SIG-B-Feldes und des verschlüsselten Datenfeldes zusammen beziehen.

## Revendications

1. Procédé de communication comprenant :
la réception, au niveau d'une station, d'une unité de données de protocole PLCP (PPDU), où la PPDU comprend un champ L-SIG, un champ VHT-SIG A, un champ VHT-SIG B et un champ de données brouillées ; et
le débrouillage, au niveau de la station, du champ de données brouillées afin d'obtenir un champ de service et une unité de données de protocole MAC agrégée (A-MPDU),
où :
le champ VHT-SIG B inclut un premier ensemble de bits et des bits de queue,
le premier ensemble de bits comprend des bits relatifs à une longueur de l'A-MPDU, et
le champ de service comprend des bits relatifs à un brouilleur et à un contrôle de redondance cyclique (bits CRC), les bits CRC étant calculés sur la base du champ VHT-SIG B.

2. Procédé de la revendication 1, où le champ VHT-SIG B comprend des informations de modulation de l'A-MPDU.

3. Procédé de la revendication 1, où le premier ensemble de bits et les bits de queue sont répétés dans le champ VHT-SIG B si une bande passante de transmission est supérieure à 20 MHz.

4. Procédé de la revendication 3, où un nombre de bits dans le premier ensemble de bits est déterminé sur la base de la bande passante de transmission.

5. Procédé de la revendication 1, où le champ L-SIG inclut des bits relatifs à une longueur combinée du champ L-SIG, du champ VHT-SIG A, du champ VHT-SIG B et du champ de données brouillées.

6. Appareil de communication comprenant :
un circuit,
où le circuit est configuré pour :
amener l'appareil de communication à recevoir une unité de données de protocole PLCP (PPDU), où la PPDU comprend un champ L-SIG, un champ VHT-SIG A, un champ VHT-SIG B et un champ de données brouillées ; et
débrouiller le champ de données brouillées pour obtenir un champ de service et une unité de données de protocole MAC agrégée (A-MPDU),
où :
le champ VHT-SIG B inclut un premier ensemble de bits et de bits de queue,
le premier ensemble de bits comprend des bits relatifs à une longueur de l'A-MPDU, et
le champ de service comprend des bits relatifs à un brouilleur et à un contrôle de redondance cyclique (bits CRC), les bits CRC étant calculés sur la base du champ VHT-SIG B.

7. Dispositif de communication de la revendication 6, où le champ VHT-SIG B comprend des informations de modulation de l'A-MPDU.

8. Dispositif de communication de la revendication 6, où le premier ensemble de bits et les bits de queue sont répétés dans le champ VHT-SIG B si une bande passante de transmission est supérieure à 20 MHz.

9. Dispositif de communication de la revendication 9, où un nombre de bits dans le premier ensemble de bits est déterminé sur la base de la bande passante de transmission.

10. Dispositif de communication de la revendication 6, où le champ L-SIG inclut des bits relatifs à une longueur combinée du champ L-SIG, du champ VHT-SIG A, du champ VHT-SIG B et du champ de données brouillées.
